(19) Europäisches Patentamt
European Patent Office
Office européen des brevets

(11) **EP 2 966 580 A1**

(12) **EUROPEAN PATENT APPLICATION**

(43) Date of publication:
**13.01.2016 Bulletin 2016/02**

(51) Int Cl.:
***G06F 17/30*** *(2006.01)*

(21) Application number: **15173986.9**

(22) Date of filing: **26.06.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **10.07.2014 US 201414328358**

(71) Applicant: **Siemens Product Lifecycle Management Software Inc.**
**Plano, TX 75024-6612 (US)**

(72) Inventors:
• **KAISER, Reiner K.**
**Redondo Beach, CA California 90278 (US)**
• **BHAMIDIPATI, Ravi Sankar**
**Troy, MI Michigan 48084 (US)**
• **CHANDRA, Basavaraju**
**Mason, OH Ohio 45040 (US)**

(74) Representative: **Isarpatent**
**Patentanwälte Behnisch Barth Charles**
**Hassa Peckmann & Partner mbB**
**Friedrichstrasse 31**
**80801 München (DE)**

(54) **DATA RE-TRANSFER WITH SITE BASED THREE POINT MERGES USING IMPORT RECORDS**

(57) Methods for data import and corresponding systems (210) and computer-readable mediums (126). A method includes initiating (305) an import of an import data object (250) from a source data processing system (230) by the target data processing system. The target data processing system maintains import records (218) that include a last import time stamp ("LID") for a plurality of other systems and data objects. The method includes determining (315) whether to import the import data object based on an LID for that source data processing system for the import data object, a last saved timestamp ("LSD") of source for that data object, and an LSD of target for a corresponding existing data object (212, 214) in the target data processing system. The method includes selectively importing (320) the import data object by the target data processing system based on the determination.

200

Figure 2

EP 2 966 580 A1

**Description**

TECHNICAL FIELD

The present disclosure is directed, in general, to computer-aided design ("CAD"), visualization, and manufacturing systems, product lifecycle management ("PLM") systems, and similar systems, that manage data for products and other items (collectively, "Product Data Management" systems or PDM systems).

BACKGROUND OF THE DISCLOSURE

PDM systems manage PLM and other data. Such data can be very complex with many referencers, dependencies, and a large number of different classes that have to be traversed and processed in order to collect all data required for a successful consolidation effort or any other data transfer approach. Improved systems are desirable.

SUMMARY OF THE DISCLOSURE

Various disclosed embodiments include methods for data import and corresponding systems and computer-readable mediums. A method includes initiating an import of an import data object from a source system by the target data processing system. The target data processing system maintains import records that include a last import time stamp ("LID") for a plurality of other systems and data objects. The method includes determining whether to import the import data object based on the LID for that source system for the import data object, the last saved timestamp ("LSD") of source for that data object, and the LSD of target for a corresponding existing data object in the target data processing system. The method includes selectively importing the import data object by the target data processing system based on the determination.

The foregoing has outlined rather broadly the features and technical advantages of the present disclosure so that those skilled in the art may better understand the detailed description that follows. Additional features and advantages of the disclosure will be described hereinafter that form the subject of the claims. Those skilled in the art will appreciate that they may readily use the conception and the specific embodiment disclosed as a basis for modifying or designing other structures for carrying out the same purposes of the present disclosure. Those skilled in the art will also realize that such equivalent constructions do not depart from the spirit and scope of the disclosure in its broadest form.

Before undertaking the DETAILED DESCRIPTION below, it may be advantageous to set forth definitions of certain words or phrases used throughout this patent document: the terms "include" and "comprise," as well as derivatives thereof, mean inclusion without limitation; the term "or" is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, whether such a device is implemented in hardware, firmware, software or some combination of at least two of the same. It should be noted that the functionality associated with any particular controller may be centralized or distributed, whether locally or remotely. Definitions for certain words and phrases are provided throughout this patent document, and those of ordinary skill in the art will understand that such definitions apply in many, if not most, instances to prior as well as future uses of such defined words and phrases. While some terms may include a wide variety of embodiments, the appended claims may expressly limit these terms to specific embodiments.

BRIEF DESCRIPTION OF THE DRAWINGS

For a more complete understanding of the present disclosure, and the advantages thereof, reference is now made to the following descriptions taken in conjunction with the accompanying drawings, wherein like numbers designate like objects, and in which:

Figure 1 illustrates a block diagram of a data processing system in which an embodiment can be implemented;

Figure 2 illustrates a network of data processing systems as disclosed herein;

Figure 3 illustrates a flowchart of a process in accordance with disclosed embodiments.

DETAILED DESCRIPTION

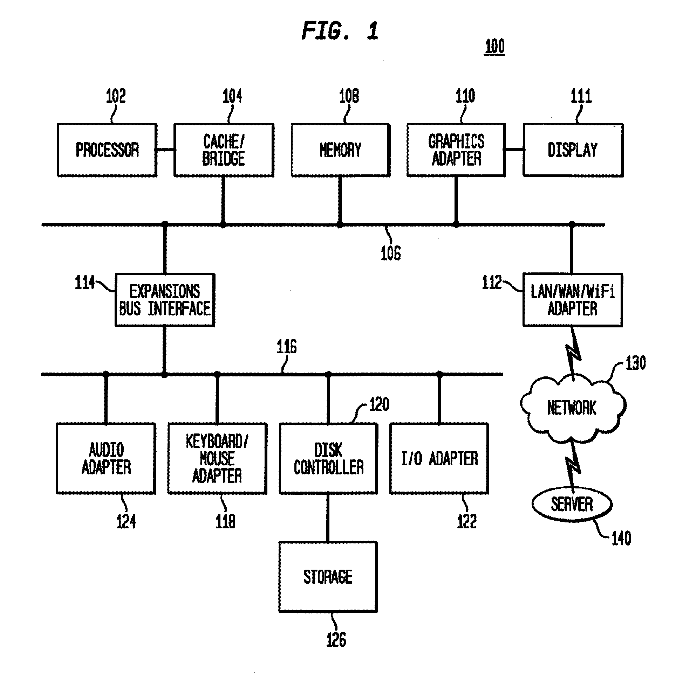

FIGURES 1 through 3, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged device. The numerous innovative teachings of the present application will be described with reference to exemplary non-limiting embodiments.

In current data exchange solutions, once data is transferred from one site to another site with the intent of both sites owning the respective copies of data, it is very difficult to manage the synchronization among these copies of data because each site can modify its copy independent of the other site. The problem will be more complex when more than two sites are involved and when considering an "island" of objects. As used herein, an "island" of objects refers to a set of objects which cannot be separated in a given context without risking data corruption and data loss.

When the same data is modified at both sites after the initial transfer, in order to synchronize the changes from one site to the other, disclosed techniques perform a three point merge: the first point is the copy of the data from which both sites originally started and the other two points are the current state/copies of the data at both the sites after modification as it evolved at both sites. To support data coherency at multiple sites, disclosed embodiments can use "import records" which can effectively manage re-transfers between any two sites even if the data is getting modified simultaneously. Those import records maintain the "last import time stamp" per site for each object.

By comparing these "last import time stamps" with the "last saved dates" for the object in the source database and target database, the system can provide all the required information for the successful execution of a true three point merge.

In addition, the system can transfer non-persisted objects between sites, such as preferences and other non-persistent data. In such cases, even though there is no physical representation of such objects in the database, the techniques disclosed herein can be used to ensure the correct, up-to-date state of all data being merged.

Figure 1 illustrates a block diagram of a data processing system in which an embodiment can be implemented, for example as a PDM system particularly configured by software or otherwise to perform the processes as described herein, and in particular as each one of a plurality of interconnected and communicating systems as described herein. The data processing system depicted includes a processor 102 connected to a level two cache/bridge 104, which is connected in turn to a local system bus 106. Local system bus 106 may be, for example, a peripheral component interconnect (PCI) architecture bus. Also connected to local system bus in the depicted example are a main memory 108 and a graphics adapter 110. The graphics adapter 110 may be connected to display 111.

Other peripherals, such as local area network (LAN) / Wide Area Network / Wireless (e.g. WiFi) adapter 112, may also be connected to local system bus 106. Expansion bus interface 114 connects local system bus 106 to input/output (I/O) bus 116. I/O bus 116 is connected to keyboard/mouse adapter 118, disk controller 120, and I/O adapter 122. Disk controller 120 can be connected to a storage 126, which can be any suitable machine usable or machine readable storage medium, including but not limited to nonvolatile, hard-coded type mediums such as read only memories (ROMs) or erasable, electrically programmable read only memories (EEPROMs), magnetic tape storage, and user-recordable type mediums such as floppy disks, hard disk drives and compact disk read only memories (CD-ROMs) or digital versatile disks (DVDs), and other known optical, electrical, or magnetic storage devices.

Also connected to I/O bus 116 in the example shown is audio adapter 124, to which speakers (not shown) may be connected for playing sounds. Keyboard/mouse adapter 118 provides a connection for a pointing device (not shown), such as a mouse, trackball, trackpointer, touchscreen, etc.

Those of ordinary skill in the art will appreciate that the hardware depicted in Figure 1 may vary for particular implementations. For example, other peripheral devices, such as an optical disk drive and the like, also may be used in addition or in place of the hardware depicted. The depicted example is provided for the purpose of explanation only and is not meant to imply architectural limitations with respect to the present disclosure.

A data processing system in accordance with an embodiment of the present disclosure includes an operating system employing a graphical user interface. The operating system permits multiple display windows to be presented in the graphical user interface simultaneously, with each display window providing an interface to a different application or to a different instance of the same application. A cursor in the graphical user interface may be manipulated by a user through the pointing device. The position of the cursor may be changed and/or an event, such as clicking a mouse button, generated to actuate a desired response.

One of various commercial operating systems, such as a version of Microsoft Windows™, a product of Microsoft Corporation located in Redmond, Wash. may be employed if suitably modified. The operating system is modified or created in accordance with the present disclosure as described.

LAN/ WAN/Wireless adapter 112 can be connected to a network 130 (not a part of data processing system 100), which can be any public or private data processing system network or combination of networks, as known to those of skill in the art, including the Internet. Data processing system 100 can communicate over network 130 with server system 140, which is also not part of data processing system 100, but can be implemented, for example, as a separate data processing system 100.

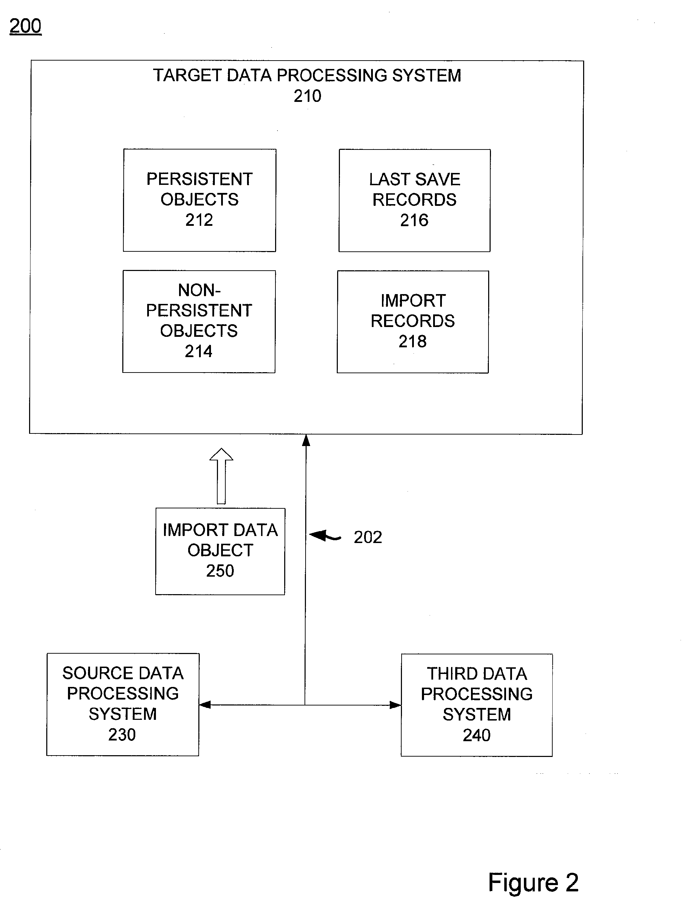

Figure 2 illustrates a network 200 of data processing systems as disclosed herein, any of which can be implemented, for example, as a data processing system 100.

A first data processing system, referred to herein as target data processing system 210 (or simply "target system"), a second data processing system, referred to herein as source data processing system 230 (or simply "source system"), and third data processing system 240 can communicate with each other over network 202, which can be any public or private network or combination of networks, including the Internet.

In this example, specific data maintained and managed by target data processing system 210 is illustrated, but it will be understood that each of the data processing systems maintain their own copies of similar data. Further, while this example illustrates only three data processing systems used in the processes described below, those of skill in the art will recognize that the processes described herein can be used with a network including any number of data processing systems. Any of these systems can act as either a "source" or "target" system or site.

Target data processing system 210 is illustrated as storing and maintaining several sets of data as described herein. In this example, target data processing system 210 stores persistent objects 212 and non-persistent objects 214, which can be any suitable objects but in specific implementations are CAD, PLM, or PDM objects. Target data processing system 210 also stores last-save records 216 and import records 218, described in more detail below. Of course, "date," when discussing last-save-date and similar information, refers to a full date and time, as does "time stamp." Note that these elements do not have to be stored separately - for example, in other implementations, a persistent object may include a last-import time stamp or other data described below so that the persistent object itself includes its import record.

For example, in some embodiments, when data is being sent in an XML format, the system can store a "last saved time stamp" of the object that is being transferred from the source system in the XML file. The "last saved time stamp" of the object in the target system can be looked up in the importing system at the time of import from the object itself (persistent or non-persistent) and compared, by the importing system, to the last saved time stamp for its copy of the same object. The system can also maintain a "last import time stamp" of the object, either with the object or in the import records, indicating the time at which a given object has been previously imported from a given source system, and merges and synchronizations can be efficiently managed with these parameters. The "last import time stamp" acts as a reference point in the three-point merge which gives the ability to know whether the object got modified at source/target since the last import.

As explained above, since each site owns a copy of the data as persistent objects 212 or non-persistent objects 214 (the existing objects below), it can modify its copy independent of the other site. Each time the data is transferred from one site to the other site, such as by importing an import data object 250 from second data processing system 230 to target data processing system 210, an "import record" (IR) can be created or updated at the target system by recording the stable identities of the objects from the source system and the target system and the source system information with the import time stamp. If the data being sent already exists at the target system, the system would then be storing, in the last save records 216 or otherwise:

- Last import time stamp ("LID") for that source system in the import record.

- Last saved time stamp of the object at the source system in the data transfer XML file ("LSD of source").

- Last saved time stamp of the object at the target system in the importing data base ("LSD of target").

Using these three time stamps, the system can determine whether to accept the incoming changes or ignore them. The representation for the import record can be formulated as below:

| Attribute Name | Type | Description |
|---|---|---|
| label | String | Stable Identity of the object in the source system |
| object_uid | String | Stable Identity of the object in the Target system |
| source_site_list | Array of Strings | List of source system names from which this object has been imported |
| lid_list | Array of Dates | List of import time stamps that correspond to each site in "source_site_list" |

Note that the "Label" may be unique identifier of the stable identity of the object in the source system (from which it was received), and the object UID may be a unique identifier of the stable identity of the object in the target system (the site that owns this copy). These identifiers can be different, or they can be the same in cases where all systems use the same unique identifiers for a given object. Of course, the specific labels and names used herein are not required in any specific implementation, and any labels or names that perform substantially the same function can be used.

For a given object, either a persistent object 212 or a non-persistent object 214, target data processing system 210 can store an import record 218 indicating second date processing system 230 and third data processing system 240 in a source system list, and a LID list of the last import time stamps for that object corresponding for the second data processing system 230 and third data processing system 240.

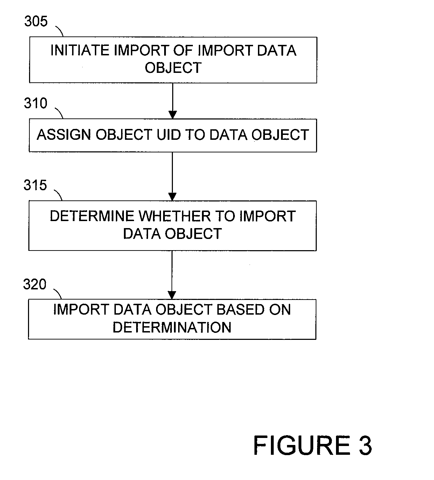

Figure 3 illustrates a flowchart of a process in accordance with disclosed embodiments, that may be performed, for example, by a target data processing system 210 acting as a target system and referred to generically as "the system" below.

The system initiates an import of an import data object from a source system by the target data processing system (305). The import data object can be one of a plurality of objects in an island of data, and can be CAD, PLM, or PDM data. Initiating the import can be performed by the system requesting the import data object from a second data processing system (the "source" system), by the system receiving the import data object from the source system, loading the import data object from a storage or other volatile or non-volatile medium corresponding to the source system, or otherwise. The target data processing system maintains an import record that includes a last import time stamp ("LID") for a plurality of other systems and data objects, including the source system and the import data object.

In some embodiments, the import data object has its data contents, an associated label that describes its stable identity in the source system, and an LSD of source that indicates its last saved time stamp at the source system. The label and LSD of source can be included in the import data object or in a record associated with the import data object. The import data object can be represented as an element in an XML file.

The system can assign an object UID to the import data object (310). The object UID describes the stable identity of the import data object in the system and can be the same as or different from the label. The system may already have data associating the label with a specific object UID, and in this case "assigning" includes assigning the previously-associated object UID to the import data object.

The system determines whether to import the import data object based on the last import time stamp ("LID") for that source system for that import data object, the LSD of source for that import data object, and the LSD of target for a corresponding existing data object in the target data processing system (if there is a corresponding existing data object) (315). The determination can be based on any of the several cases described in more detail below.

Based on the determination, the system selectively imports the import data object (320). Of course, if the determination is *not* to import the data record, then this action is not performed. Importing the import data object can include updating the import record to identify that object and the corresponding source system. Importing the import data object can include updating or replacing the corresponding existing data object previously stored in the system with the import data object. Importing the import data object can include receiving a user selection on whether to merge the import data object with the corresponding existing data object. Importing the import data object can include storing the import data object as a new object and creating corresponding import records and other records as described herein.

Determining whether to import the import data object at 315 can include several considerations and actions, described below.

Determining whether to import the import data object can include the system performing a search of import records and other records to determine if a corresponding data object already exists in the system. If not, then importing the import data object may include storing the import data object as a new object and creating corresponding import records and other records as described herein. If a corresponding data object does already exist in the system, then other determinations can be made as part of determining whether to import the import data object. For example, there may be a data object at a source system with stable identity as "ID1" and LSD as T1 that the target system is determining whether to import. In this example, the import data object does not exist at the target system. As it is a fresh import, a look up of the import data object by import record fails and so the object can be freshly created at the target system. An import record for the import data object can also be created by recording the importing site and the import timestamp.

Determining whether to import the import data object can include the system determining whether the import data object has ever been imported from this source system. If it has not, such as when the import data object exists at the target system but has never been imported from this source system, then importing the import data object may include receiving a user selection on whether to merge the import data object with a corresponding existing data object, including whether to import selective portions of the import data object to replace corresponding portions of a corresponding existing data object.

Determining whether to import the import data object based on the last import time stamp ("LID") for that source system for that import data object, the LSD of source for that import data object, and the LSD of target for a corresponding existing data object (if there is an LSD of target), can include several possibilities with corresponding determinations. The case descriptions below all are made in terms of the object being imported and its specific source system.

If the LSD of the source is later than the LID, and the LSD of the target is earlier than or the same time as the LID, this indicates that the import data object has been modified at the source system and has not been modified at the target system. In such a case, the system can determine to update its existing data object with the import data object to reflect any changes to the import data object made at the source site. In such a case, importing the import data object can include replacing the existing data object entirely with the import data object or can include replacing portions of the existing data object with updated or changed portions of the import data object.

For example, consider that the import data object's attribute attr1 was modified at the source system at Time T2 and the import data object is sent to the target system for import. As part of the process described above, the system can detect that the import data object already exists at the target system (for example based on the existence of the import record) and can consider it as a "trivial" merge. Since the import data object has been modified at source but not at target since last import, the import data object is the latest version and can be accepted, either in its entirety or just by updating attr1 (and any other modified portions). The corresponding existing data object in the target system can be modified or replaced and the import record can be updated with the LSD of source site since the import data object takes the place of the previously-existing data object.

If the LSD of the source is earlier than or the same time as the LID, and the LSD of the target is later than the LID, this indicates that the corresponding existing data object has been modified at the target system and the import data object has not been modified at the source system. In such a case, the system can determine to *not* import the import data object, since the import data object is outdated with respect to the existing data object. For example, if the outdated data object is initialized for import to the target site, then as part of import, the system can skip the object as the existing object should not be replaced or "updated" with the outdated information.

If the LSD of the source is earlier than or the same time as the LID, and the LSD of the target is earlier than or the same time as the LID, this indicates that the existing data object has not been modified at the target system and the import data object has not been modified at the source system. In such a case, the system can determine to *not* import the import data object, since the import data object is current with respect to the existing data object. For example, if the same, unmodified data object is re-transferred to the target site, then as part of import, the system can skip the object as nothing has changed.

If the LSD of the source is later than the LID, and the LSD of the target is later than the LID, this indicates that the existing data object has been modified at the target system and the import data object has also been modified at the source system. In such a case, the system can determine that a manual merge should be performed, and so receive a user selection on whether to merge the import data object with the existing data object.

For example, consider that both the source system and the target system have independently modified the data object at different times respectively and so have different LSDs that are both later than the LID. If the object is to be imported at the target system, the system can detect that the object already exists (for example based on the existence of an import record) and considers the import as a "non-trivial" merge. Because the object was modified at both sites since the last import, the system typically cannot make any automatic update decisions. The system can make selective updates based on the user selections.

The user can select to import all or part of the import data object to replace the existing data object (or respective portions). The user can select to skip the changes, not perform the import, and keep the existing data object.

The user can select to choose the latest by time-stamp - the system will take either the import data object or the existing data object depending on which has the later LSD.

The system can receive the user selection of how to perform these selective imports either at the beginning of the import process or via a user interface when the merge condition is presented to the user. The system can display the merge possibilities to the user, in a manual merge process, so that the user can evaluate both the import data object and the existing data object, so that the user can make a decision for each non-trivial merge.

Determining whether to import the import data object can include the system determining whether the data object should be imported based on a three-point merge scenario. For example, consider when the import data object from the source site already exists at the target system, but with a different attribute value. If this object is received by the target system for the first time from this source system, but target system can detect that the object already exists at the target system (based on the existence of an import record showing an import from some other source system), the system generally cannot make any automatic decision on the import result because the source system is participating in the transfer for the first time. Such a case indicates a three-point (or more) merge. In such a case, the system can receive a user selection on whether to merge the import data object with a data object previously stored in the system, as described above. If the data object from the source site is imported, a corresponding import record is created for that source system.

While the examples above are directed to transfer of a single data object, in complex systems, when the system initiates a data transfer on a single root object, it may need to transfer a set of dependent objects along with the selected root object to maintain the data integrity. These sets of objects logically belong to each other to form an island of data. These islands are defined by the object's data model and the behavior within the system. The processes above can be applied to an island of data as the "data object" instead a single object. In such cases, the "LSD of the island" $t_{island}$ is defined to the be the maximum or latest of the LSD values of all objects $t_{obj}$ in that island:

$$t_{island} = \max_{island}(t_{obj})$$

The system can then make the import determination by considering the "LSD of the island" from the source as the LSD of source, "LSD of the island" from the target site as LSD of target, and the "LID of the island" in the import record as the LID (which actually IS the same for all objects in that island). This will ensure that even if a single object in the island is modified since last import, the entire island will have to go through the import flow and gets evaluated, therefore avoiding any collisions within the island in case different objects were changed at different sites.

Of course, those of skill in the art will recognize that, unless specifically indicated or required by the sequence of operations, certain steps in the processes described above may be omitted, performed concurrently or sequentially, or performed in a different order.

Those skilled in the art will recognize that, for simplicity and clarity, the full structure and operation of all data processing systems suitable for use with the present disclosure is not being depicted or described herein. Instead, only so much of a data processing system as is unique to the present disclosure or necessary for an understanding of the present disclosure is depicted and described. The remainder of the construction and operation of data processing system 100 may conform to any of the various current implementations and practices known in the art.

It is important to note that while the disclosure includes a description in the context of a fully functional system, those skilled in the art will appreciate that at least portions of the mechanism of the present disclosure are capable of being distributed in the form of instructions contained within a machine-usable, computer-usable, or computer-readable medium in any of a variety of forms, and that the present disclosure applies equally regardless of the particular type of instruction or signal bearing medium or storage medium utilized to actually carry out the distribution. Examples of machine usable/readable or computer usable/readable mediums include: nonvolatile, hard-coded type mediums such as read only memories (ROMs) or erasable, electrically programmable read only memories (EEPROMs), and user-recordable type mediums such as floppy disks, hard disk drives and compact disk read only memories (CD-ROMs) or digital versatile disks (DVDs).

Although an exemplary embodiment of the present disclosure has been described in detail, those skilled in the art will understand that various changes, substitutions, variations, and improvements disclosed herein may be made without departing from the spirit and scope of the disclosure in its broadest form.

None of the description in the present application should be read as implying that any particular element, step, or function is an essential element which must be included in the claim scope: the scope of patented subject matter is defined only by the allowed claims. Moreover, none of these claims are intended to invoke 35 USC §112(f) unless the exact words "means for" are followed by a participle.

FURTHER EMBODIMENTS

1. A method for data import, the method performed by a target data processing system (210) and comprising:

initiating (305) an import of an import data object (250) from a source data processing system (230) by the target data processing system, wherein the target data processing system maintains import records (218) that include a last import time stamp ("LID") for a plurality of other systems and data objects;
determining (315) whether to import the import data object based on an LID for that source data processing system for the import data object, a last saved timestamp ("LSD") of source for that data object, and an LSD of target for a corresponding existing data object (212, 214) in the target data processing system; and
selectively importing (320) the import data object by the target data processing system based on the determination.

2. The method of embodiment 1, wherein importing the import data object includes storing (320) the import data object as a new object (212, 214) in the target data processing system and creating an import record in the target data processing system for the new object.

3. The method of embodiment 1, wherein determining (315) whether to import the import data object includes the target data processing system performing a search of the import records to determine if the corresponding data object exists in the target data processing system.

4. The method of embodiment 1, wherein the LSD of the source is later than the LID, and the LSD of the target is earlier than or the same time as the LID, and the target data processing system (210) updates the existing data object with the import data object (250).

5. The method of embodiment 1, wherein the import data object (250) and the existing data object (212, 214) are each islands of a plurality of data objects.

6. The method of embodiment 1, wherein the LSD of the source is later than the LID, and the LSD of the target is later than the LID, and the target data processing system (210) receives a user selection on whether to merge the import data object (250) with the existing data object (212, 214).

7. The method of embodiment 1, wherein determining whether to import the import data object (250) includes the target data processing system (210) determining that data object should be imported based on a three-point merge scenario, and the target data processing system determines that a manual merge should be performed.

8. A target data processing system (210) comprising:

a processor (102); and
an accessible memory (108), the target data processing system particularly configured to
initiate (305) an import of an import data object (250) from a source data processing system (230) by the target data processing system, wherein the target data processing system maintains import records (218) that include a last import time stamp ("LID") for a plurality of other systems and data objects;
determine (315) whether to import the import data object based on an LID for that source data processing system for the import data object, a last saved timestamp ("LSD") of source for that data object, and an LSD of target for a corresponding existing data object (212, 214) in the target data processing system; and
selectively import (320) the import data object by the target data processing system based on the determination.

9. The data processing system of embodiment 8, wherein importing the import data object includes storing (320) the import data object as a new object (212, 214) in the target data processing system and creating an import record in the target data processing system for the new object.

10. The data processing system of embodiment 8, wherein determining (315) whether to import the import data object includes the target data processing system performing a search of the import records to determine if the corresponding data object exists in the target data processing system.

11. The data processing system of embodiment 8, wherein the LSD of the source is later than the LID, and the LSD of the target is earlier than or the same time as the LID, and the target data processing system (210) updates the existing data object with the import data object (250).

12. The data processing system of embodiment 8, wherein the import data object (250) and the existing data object (212, 214) are each islands of a plurality of data objects.

13. The data processing system of embodiment 8, wherein the LSD of the source is later than the LID, and the LSD of the target is later than the LID, and the target data processing system (210) receives a user selection on whether to merge the import data object (250) with the existing data object (212, 214).

14. The data processing system of embodiment 8, wherein determining whether to import the import data object (250) includes the target data processing system (210) determining that data object should be imported based on a three-point merge scenario, and the target data processing system determines that a manual merge should be performed.

15. A non-transitory computer-readable medium (126) encoded with executable instructions that, when executed, cause a target data processing system to:

initiate (305) an import of an import data object (250) from a source data processing system (230) by the target data processing system, wherein the target data processing system maintains import records (218) that include a last import time stamp ("LID") for a plurality of other systems and data objects;
determine (315) whether to import the import data object based on an LID for that source data processing system for the import data object, a last saved timestamp ("LSD") of source for that data object, and an LSD of target for a corresponding existing data object (212, 214) in the target data processing system; and
selectively import (320) the import data object by the target data processing system based on the determination.

16. The computer-readable medium of embodiment 15, wherein importing the import data object includes storing (320) the import data object as a new object (212, 214) in the target data processing system and creating an import record in the target data processing system for the new object.

17. The computer-readable medium of embodiment 15, wherein determining (315) whether to import the import data object includes the target data processing system performing a search of the import records to determine if the corresponding data object exists in the target data processing system.

18. The computer-readable medium of embodiment 15, wherein the LSD of the source is later than the LID, and the LSD of the target is earlier than or the same time as the LID, and the target data processing system (210) updates the existing data object with the import data object (250).

19. The computer-readable medium of embodiment 15, wherein the import data object (250) and the existing data object (212, 214) are each islands of a plurality of data objects.

20. The computer-readable medium of embodiment 15, wherein determining whether to import the import data object (250) includes the target data processing system (210) determining that data object should be imported based on a three-point merge scenario, and the target data processing system determines that a manual merge should be performed.

**Claims**

1. A method for data import, the method performed by a target data processing system (210) and comprising:

    initiating (305) an import of an import data object (250) from a source data processing system (230) by the target data processing system, wherein the target data processing system maintains import records (218) that include a last import time stamp ("LID") for a plurality of other systems and data objects;
    determining (315) whether to import the import data object based on an LID for that source data processing system for the import data object, a last saved timestamp ("LSD") of source for that data object, and an LSD of target for a corresponding existing data object (212, 214) in the target data processing system; and
    selectively importing (320) the import data object by the target data processing system based on the determination.

2. The method of claim 1, wherein importing the import data object includes storing (320) the import data object as a new object (212, 214) in the target data processing system and creating an import record in the target data processing system for the new object.

3. The method according to any of the preceding claims, wherein determining (315) whether to import the import data object includes the target data processing system performing a search of the import records to determine if the corresponding data object exists in the target data processing system.

4. The method according to any of the preceding claims, wherein the LSD of the source is later than the LID, and the LSD of the target is earlier than or the same time as the LID, and the target data processing system (210) updates the existing data object with the import data object (250).

5. The method according to any of the preceding claims, wherein the import data object (250) and the existing data object (212, 214) are each islands of a plurality of data objects.

6. The method according to any of the preceding claims, wherein the LSD of the source is later than the LID, and the LSD of the target is later than the LID, and the target data processing system (210) receives a user selection on whether to merge the import data object (250) with the existing data object (212,214).

7. The method according to any of the preceding claims, wherein determining whether to import the import data object (250) includes the target data processing system (210) determining that data object should be imported based on a three-point merge scenario, and the target data processing system determines that a manual merge should be performed.

8. A target data processing system (210) comprising:

   a processor (102); and
   an accessible memory (108), the target data processing system particularly configured to initiate (305) an import of an import data object (250) from a source data processing system (230) by the target data processing system, wherein the target data processing system maintains import records (218) that include a last import time stamp ("LID") for a plurality of other systems and data objects;
   determine (315) whether to import the import data object based on an LID for that source data processing system for the import data object, a last saved timestamp ("LSD") of source for that data object, and an LSD of target for a corresponding existing data object (212, 214) in the target data processing system; and
   selectively import (320) the import data object by the target data processing system based on the determination.

9. The data processing system of claim 8, wherein importing the import data object includes storing (320) the import data object as a new object (212, 214) in the target data processing system and creating an import record in the target data processing system for the new object.

10. The data processing system according to any of the preceding system claims, wherein determining (315) whether to import the import data object includes the target data processing system performing a search of the import records to determine if the corresponding data object exists in the target data processing system.

11. The data processing system according to any of the preceding system claims, wherein the LSD of the source is later than the LID, and the LSD of the target is earlier than or the same time as the LID, and the target data processing system (210) updates the existing data object with the import data object (250).

12. The data processing system according to any of the preceding system claims, wherein the import data object (250) and the existing data object (212, 214) are each islands of a plurality of data objects.

13. The data processing system according to any of the preceding system claims, wherein the LSD of the source is later than the LID, and the LSD of the target is later than the LID, and the target data processing system (210) receives a user selection on whether to merge the import data object (250) with the existing data object (212, 214).

14. The data processing system according to any of the preceding system claims, wherein determining whether to import the import data object (250) includes the target data processing system (210) determining that data object should be imported based on a three-point merge scenario, and the target data processing system determines that a manual merge should be performed.

15. A non-transitory computer-readable medium (126) encoded with executable instructions that, when executed, cause a target data processing system to execute a method according to any of the claims 1 to 7.

EP 2 966 580 A1

## FIG. 1

100

200

TARGET DATA PROCESSING SYSTEM
210

PERSISTENT
OBJECTS
212

LAST SAVE
RECORDS
216

NON-
PERSISTENT
OBJECTS
214

IMPORT
RECORDS
218

IMPORT DATA
OBJECT
250

202

SOURCE DATA
PROCESSING
SYSTEM
230

THIRD DATA
PROCESSING
SYSTEM
240

Figure 2

305

INITIATE IMPORT OF IMPORT DATA
OBJECT

310

ASSIGN OBJECT UID TO DATA OBJECT

315

DETERMINE WHETHER TO IMPORT
DATA OBJECT

320

IMPORT DATA OBJECT BASED ON
DETERMINATION

FIGURE 3

Europäisches
Patentamt

European
Patent Office

Office européen
des brevets

# EUROPEAN SEARCH REPORT

Application Number

EP 15 17 3986

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 024 441 A2 (PHONE COM INC [US]) 2 August 2000 (2000-08-02) * the whole document * | 1-15 | INV. G06F17/30 |
| X | US 5 710 922 A (ALLEY PETER E [US] ET AL) 20 January 1998 (1998-01-20) * abstract * * column 10, line 18 - column 12, line 31 * | 1-15 | |

TECHNICAL FIELDS
SEARCHED      (IPC)

G06F

The present search report has been drawn up for all claims

| Place of search | Date of completion of the search | Examiner |
|---|---|---|
| Munich | 15 October 2015 | Hauck, Rainer |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 15 17 3986

This annex lists the patent family members relating to the patent documents cited in the above-mentioned European search report.
The members are as contained in the European Patent Office EDP file on
The European Patent Office is in no way liable for these particulars which are merely given for the purpose of information.

15-10-2015

| Patent document cited in search report | | Publication date | Patent family member(s) | | Publication date |
|---|---|---|---|---|---|
| EP 1024441 | A2 | 02-08-2000 | CN | 1262481 A | 09-08-2000 |
| | | | EP | 1024441 A2 | 02-08-2000 |
| | | | JP | 2000235513 A | 29-08-2000 |
| | | | KR | 20010006590 A | 26-01-2001 |
| US 5710922 | A | 20-01-1998 | NONE | | |

EPO FORM P0459

For more details about this annex : see Official Journal of the European Patent Office, No. 12/82